# EUROPEAN PATENT APPLICATION

(11) **EP 4 607 064 A1**
(43) Date of publication of application: **27.08.2025**
(21) Application number: 23879238.6
(22) Date of filing: 20.10.2023
(51) Int. Cl.: F16H 57/04

(54) **WIND MOTOR GEARBOX LUBRICATING APPARATUS AND GEARBOX**

(30) Priority: 21.10.2022 CN 202211295089
(71) Applicant: ZF Wind Power (Tianjin) Co., Ltd., Tianjin 300402 (CN); ZF Wind Power Antwerpen NV, 3920 Lommel (BE)
(72) Inventor: WU, Shubin, Tianjin 300402 (CN)
(74) Representative: ZF Friedrichshafen AG
(86) International application number: PCT/CN2023/125802
(87) International publication number: WO 2024/083253

(57) **Abstract**

Provided is a wind turbine gearbox lubricating apparatus, wherein an inner shaft tube is arranged in a driving shaft and a driven shaft, an annular flow channel is formed by the inner shaft tube and the driving shaft, and lubricating oil is provided in the annular flow channel; and the lubricating oil in the annular flow channel can flow to a flexible spline through a lubricating oil flow channel to lubricate and cool spline teeth. Since the lubricating oil flows outward in a radial direction during lubrication, the lubricating oil can also provide sufficient lubrication for the spline teeth when a wind turbine rotates at a high speed, preventing abrasion and failure of the flexible spline, and prolonging the service life of a gearbox. Also provided is a wind turbine gearbox.

## Description

### TECHNICAL FIELD

The present disclosure belongs to the field of wind power generation, and in particular to a wind turbine gearbox lubricating apparatus and a gearbox.

### BACKGROUND ART

In wind turbines, it is usually necessary to accelerate the low-speed rotation of a blade shaft by using a multi-stage gear structure and transmit kinetic energy to a generator rotor for the conversion of the kinetic energy to electric energy. In order to eliminate an inevitable floating displacement of transmission shafts during rotation, the connected transmission shafts are typically connected by means of a flexible spline with certain gaps reserved between spline teeth of the flexible spline, and the gaps allow for small relative movement between the spline teeth to achieve the purpose of eliminating the floating displacement. In order to avoid frictional damage to the spline teeth during long-term service, it is necessary to provide lubricating oil for lubricating and cooling the spline teeth. A conventional lubricating apparatus is typically provided with a lubricating oil pipe located in a wind turbine nacelle next to a transmission shaft, and radial through holes are formed in the corresponding positions of the transmission shaft, so that the lubricating oil flows inward through the radial through holes from the outside of the transmission shaft to the spline teeth, in order to achieve lubrication. However, with this lubrication method, the flow of the lubricating oil from the outside to the inside needs to overcome a centrifugal force generated by the rotation of the transmission shaft, and needs to overcome the centrifugal force when the rotational speed of the wind turbine is high. Meanwhile, a sealing structure between the rotating transmission shaft and the fixed wind turbine nacelle is prone to leakage, further resulting in the loss of lubricating oil, which easily causes a premature spline failure due to poor lubrication.

### SUMMARY

An object of the present disclosure aims to provide a wind turbine gearbox lubricating apparatus, which can achieve sufficient lubrication of spline teeth under the operating condition of high-speed rotation. The present disclosure further provides a wind turbine gearbox.

According to an aspect of an embodiment of the present disclosure, a wind turbine gearbox lubricating apparatus is provided. The apparatus includes a driving shaft and a driven shaft, the driving shaft and the driven shaft being configured as hollow shafts connected by means of a flexible connector. The wind turbine gearbox lubricating apparatus further includes an inner shaft tube, the inner shaft tube penetrating into the driving shaft and the driven shaft and being fixedly connected to a wind turbine nacelle, an outer wall of the inner shaft tube and an inner wall of the driving shaft defining an annular flow channel, and a lubricating oil being provided in the annular flow channel; and a lubricating oil flow channel is provided between the annular flow channel and the flexible connector to allow the lubricating oil to enter between connector teeth of the flexible connector through the annular flow channel. Since the annular flow channel providing the lubricating oil is arranged in a cavity in the driving shaft and the driven shaft, the lubricating oil can infiltrate the flexible connector in a radial direction by means of a centrifugal force of a transmission shaft during rotation to provide sufficient lubrication, and the higher a rotational speed, the more sufficient the infiltration of the lubricating oil, so that the problem of poor lubrication at a high rotational speed due to oil filling from the outside can be effectively eliminated, the service life of the flexible connector can be prolonged, and the maintenance costs for a wind turbine can be saved.

Further, the annular flow channel is at least partially configured as a tapered cavity, the tapered cavity includes a first end on a side close to wind turbine blades and a second end in communication with the lubricating oil flow channel, the cross-sectional area of the tapered cavity gradually increases from the first end to the second end, and the tapered cavity is configured to gather the lubricating oil in the annular flow channel to the vicinity of the lubricating oil flow channel. The transmission shaft of the wind turbine is arranged in a tilted manner with a higher blade side and a lower generator side, and the tapered cavity having the gradually increasing cross-sectional area allows a linear velocity of the lubricating oil to gradually increase, achieving an oil pumping effect, so that the lubricating oil can be gathered to the vicinity of the lubricating oil flow channel, and the lubrication efficiency can be improved.

Further, the outer wall of the inner shaft tube is provided with a plurality of annular flow limiting grooves for limiting the axial flow of the lubricating oil in the annular flow channel. The flow limiting grooves are configured to increase a resistance of the lubricating oil flowing in the annular flow channel, so that the lubricating oil is gathered in the tapered cavity of the annular flow channel, reducing overflow loss.

Further, the flow limiting grooves are provided on the side close to the wind turbine blades relative to the lubricating oil flow channel. By using the tilt angle of the transmission shaft of the wind turbine, the flow limiting grooves can limit the lubricating oil more centrally to a region close to the lubricating oil flow channel, to improve the utilization efficiency of the lubricating oil.

Further, an accommodating cavity in communication with the gaps of the flexible connector is provided between the driving shaft and the driven shaft, and is configured to accommodate the lubricating oil. The accommodating cavity provided between the driving shaft and the driven shaft can accommodate the lubricating oil to more fully infiltrate the connector, and when the centrifugal force is insufficient to allow the rapid flow of the lubricating oil from the annular flow channel to the connector teeth during the slow rotation or at a start phase, the lubricating oil depositing in the lower accommodating cavity can also ensure adequate lubrication of the connector teeth.

Further, the inner shaft tube is internally provided with an oil supply pipeline, and the oil supply pipeline is in communication with the annular flow channel through an oil overflow hole formed in a surface of the inner shaft tube to fill the lubricating oil. The inner shaft tube does not rotate with the driving shaft and the driven shaft, which is convenient to add a lubricating oil filling pipeline.

Further, the oil overflow hole is provided on the side close to the wind turbine blades relative to the flexible connector. Thanks to the tilt angle of the transmission shaft of the wind turbine, the lubricating oil filled through the oil overflow hole can naturally flow to the lubricating oil flow channel by means of its own gravity.

Further, an oil storage tank and an oil pump are provided in the wind turbine nacelle, and the oil pump is configured to pump the lubricating oil in the oil storage tank into the oil supply pipeline. The oil pump and the oil storage tank are provided in the wind turbine nacelle to facilitate filling and maintenance.

Further, a sealing structure is provided between the driven shaft and the inner shaft tube to prevent leakage of the lubricating oil. The sealing structure limits the lubricating oil to a region where the flexible connector is located, in order to improve the utilization efficiency of the lubricating oil.

Further, the flexible connector is a flexible spline. The flexible spline is simple in structure, which is conducive to reducing manufacturing costs.

According to another aspect of an embodiment of the present disclosure, a wind turbine gearbox is provided. The gearbox uses the wind turbine gearbox lubricating apparatus in any one of the foregoing embodiments to lubricate the flexible connector, so that the connector can also be kept lubricated sufficiently at a high rotational speed, the abrasion of the connector can be reduced, and the service life of the gearbox can be prolonged.

### BRIEF DESCRIPTION OF THE DRAWINGS

FIG. 1 is a partial sectional structural schematic view of a wind turbine gearbox according to an embodiment;
FIG. 2 is a partial sectional structural schematic view of a wind turbine gearbox in a comparative example; and
FIG. 3 is a partial structural schematic view of a flexible spline of a wind turbine gearbox according to an embodiment.

The above drawings are intended to illustrate the present disclosure in detail such that those skilled in the art may understand the technical concept of the present disclosure, but are not intended to limit the present disclosure. For the sake of brevity, the above-mentioned drawings schematically depict only structures related to the technical features of the present disclosure, and do not draw a complete apparatus and all the details strictly according to the actual scale.

### DETAILED DESCRIPTION OF EMBODIMENTS

The present disclosure will further be described in detail by specific embodiments in conjunction with the accompanying drawings.

The term "embodiment" mentioned herein means that the specific features, structures, or characteristics described in conjunction with the embodiment can be encompassed in at least one embodiment of the present disclosure. The term appearing at various locations in the description does not necessarily refer to the same embodiment, nor is it limited to mutually exclusive independent or alternative embodiments. Those skilled in the art will appreciate that the embodiments herein may be combined with other embodiments without structural conflicts.

In the description herein, unless otherwise explicitly specified and defined, the technical terms such as "mount", "couple", and "connect" should be understood in a broad sense, for example, they may refer to a flexible connection, a fixed connection, or an integrated connection. For those of ordinary skill in the art, the specific meanings of the above terms in the embodiments of the present disclosure can be understood according to specific situations.

In the description herein, the terms such as "upper", "lower", "left", "right", "axial", "radial", or "circumferential" that indicate orientation or positional relationships are intended to accurately describe the embodiments and to simplify the description, not to limit the parts or structures involved to a specific orientation, or mounting or operation in a specific orientation, and are not to be construed as a limitation on the embodiments herein.

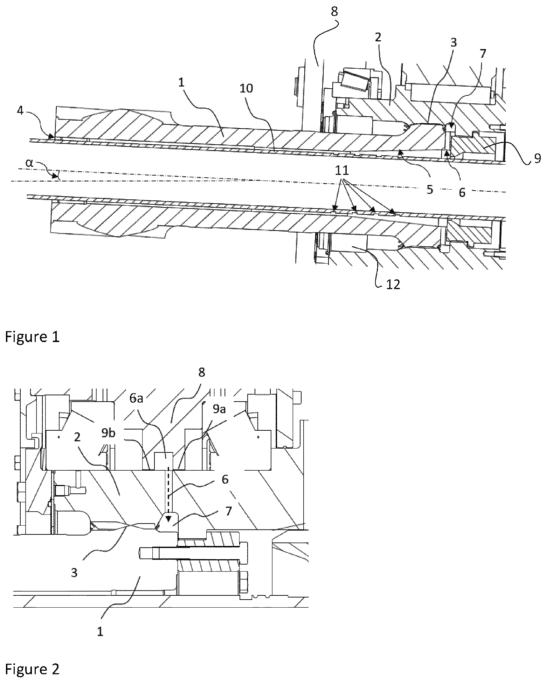

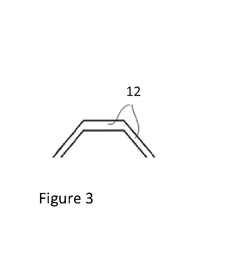

Due to the limitations of wind strength and the strength of a blade structure, the rotational speed of wind turbine blades is low, it is typically required to perform acceleration by a gearbox before driving a generator rotor to generate power. A partial structure of a wind turbine gearbox in a comparative example is as shown in FIG. 2, a sun shaft 1 as a driving shaft and a hollow shaft 2 as a driven shaft achieve transmission by means of spline engagement. Due to the influence of factors such as the accuracy of a gear, a radial floating displacement of the sun shaft during rotation inevitably occurs, thus adversely affecting torque transmission, a connecting structure between the sun shaft 1 and the hollow shaft 2 needs to be configured to allow for the arrangement of a floating flexible connector. In this embodiment, the flexible connector is, for example, a flexible spline 3 having a certain gap between spline teeth. However, the present disclosure is not limited thereto, the flexible connector may also be, for example, a connector having a certain elasticity, a male-female fitting, or clearance connectors in other forms. In this embodiment, the flexible spline 3 is shown in FIG. 3 and has a certain gap 12 during the engagement between tooth crests and tooth sides to allow for small relative movement of inner spline teeth and outer spline teeth during the transmission. This relative movement between the spline teeth offsets the floating displacement of the sun shaft, and the spline teeth need to be lubricated and cooled in order to avoid abrasion and failure of the spline teeth in long-term service. In other embodiments, the flexible spline 3 may also be configured as a male-female matched transmission structure having a certain flexibility, such as a semi-circular spline having a certain gap between a spline tooth and a spline groove. Generally, lubricating oil is stored in an oil filling groove 6a between a wind turbine nacelle 8 and the hollow shaft 2. During the operation of a wind turbine, the lubricating oil is filled into a cavity 7 at one end of the flexible spline 3 through a lubricating oil flow channel 6 and then flows into the gaps between the spline teeth to achieve lubrication. However, when the rotational speed of the wind turbine is high, the sun shaft 1 drives the hollow shaft 2 to rotate rapidly, a remarkable centrifugal action hinders a radial centripetal flow of the lubricating oil through the lubricating oil flow channel 6, then leading to poor lubrication of the spline teeth, which is prone to inducing a premature failure of the spline. In addition, when the lubricating oil accumulates in the lubricating oil flow channel 6, it is difficult for sealing structures 9a and 9b between the fixed wind turbine nacelle 8 and the rotating hollow shaft 2 to stably and effectively play a sealing role, the lubricating oil is prone to loss due to leakage, and a lubrication effect is further reduced.

In order to solve the above-mentioned problem, an embodiment of an aspect of the present disclosure provides a wind turbine gearbox lubrication structure as shown in FIG. 1, which can guarantee the lubrication effect of the spline under the operating condition of a high rotational speed. As shown in FIG. 1, the sun shaft 1 as the driving shaft is connected to a previous stage of transmission mechanism at one end, and is inserted into the hollow shaft 2 as the driven shaft at the other end and is engaged with the hollow shaft by means of the flexible spline 3. According to the structural design of the wind turbine, there is an included angle α between the sun shaft 1 and the hollow shaft 2 and a horizontal direction, such that an end close to blades is in a higher position, and an end close to a generator is in a lower position. In a tubular cavity jointly formed by the sun shaft 1 and the hollow shaft 2, an inner shaft tube 10, which is fixedly connected to the wind turbine nacelle 8, penetrates into the tubular cavity, and the inner shaft tube 10 does not rotate with the sun shaft 1 and the hollow shaft 2. An annular flow channel 4 with an annular cross section is formed between an outer wall of the inner shaft tube 10 and an inner wall of the sun shaft 1, and the lubricating oil is provided in the annular flow channel 4 to lubricate the flexible spline 3. The inner shaft tube 4 may be configured as a separate dedicated structure, or may use a conventional structure of the wind turbine, such as a wall of an energy tube, to achieve the same effect. Under the rotating action of the sun shaft 1 and the hollow shaft 2, the lubricating oil in the annular flow channel 4 is thrown into the cavity 7 through the lubricating oil flow channel 6 which is located at one end of the flexible spline 3 and formed by the gap between the sun shaft 1 and the hollow shaft 2, and further flows into the gaps of the spline teeth of the flexible spline 3 to achieve lubrication and cooling effects. Since the lubricating oil entering the cavity 7 radially flows outward along the lubricating oil flow channel 6, the centrifugal action at the high rotational speed does not restrict the outward flow of the lubricating oil; on the contrary, the lubricating oil can more sufficiently infiltrate the flexible spline 3 and can play a better lubrication effect under the operating condition of high load.

In a preferred embodiment, a region where the annular flow channel 4 is connected to the lubricating oil flow channel 6 is configured as a tapered cavity 5 with a cross-sectional area gradually increasing from one side of the blades to the lubricating oil flow channel 6, and more lubricating oil is gathered in the tapered cavity 5 under the effect of a tilt angle α and is close to the lubricating oil flow channel 6, which can avoid the excessive dispersion of the lubricating oil, thereby improving the lubrication efficiency.

In a preferred embodiment, the outer wall of the inner shaft tube 10 is provided with a plurality of annular flow limiting grooves 11, and the flow limiting grooves 11 define zigzag radial flow channels in the annular flow channel 4, which can hinder and restrain the flow of the lubricating oil and limit the lubricating oil to a region close to the lubricating oil flow channel 6. In a further preferred embodiment, the flow limiting grooves 11 are provided on a side close to the blades relative to the lubricating oil flow channel 6, and the combined action of the tilt angle α and the flow limiting grooves 11 can prevent the reverse flow of the lubricating oil from a side close to a generator to the side close to the blades, further promoting the gathering of the lubricating oil, improving the lubrication effect, and increasing the utilization ratio of the lubricating oil.

In a preferred embodiment, an accommodating cavity 12 in communication with the gaps of the spline teeth of the flexible spline 3 is further formed between the sun shaft 1 and the hollow shaft 2, and the accommodating cavity 12 can accommodate more lubricating oil; when the sun shaft 1 and the hollow shaft 2 are completely stationary, the lubricating oil located in the lower accommodating cavity 12 can keep the flexible spline 3 infiltrated, so that when the wind turbine is started in a stationary manner or rotates at a low speed, the centrifugal action is not sufficient to drive the lubricating oil to quickly enter the cavity 7 through the lubricating oil flow channel 6 to lubricate the flexible spline 3, the lubricating oil in the accommodating cavity 12 can still ensure that the flexible spline 3 is sufficiently lubricated, and the abrasion of the spline under the operating condition of low-speed rotation is avoided.

In a preferred embodiment, an oil supply pipeline (not shown) for the lubricating oil is provided inside the inner shaft tube 10, and the lubricating oil is filled into the annular flow channel 4 through the oil supply pipeline and an oil overflow hole (not shown) formed in a surface of the inner shaft tube 10. In a further preferred embodiment, the oil overflow hole 4 is formed in the side close to the blades relative to the flexible spline 3, so that the filled lubricating oil can flow, by means of its own gravity, to the lubricating oil flow channel 6 under the action of the tilt angle α. In a further preferred embodiment, an oil storage tank (not shown) for the lubricating oil and an oil pump (not shown) are provided inside the wind turbine nacelle 8, and the oil pump is in communication with the oil supply pipeline to pump the lubricating oil in the oil storage tank into an oil delivery pipeline and then the oil is filled into the annular flow channel 4 through the oil overflow hole.

In an optional embodiment, an annular sealing structure 9, for example, an oil seal, is provided between the hollow shaft 2 and the inner shaft tube 10, the annular sealing structure 9 can prevent the lubricating oil from continuing to flow toward the side of the generator along the inner shaft tube 10, improving the utilization efficiency of the lubricating oil. During the normal operation of the wind turbine, the annular sealing structure 9 rotates together with the hollow shaft 2, the lubricating oil in contact with the sealing structure flows into the lubricating oil flow channel 6 in the radial direction under the centrifugal action. Therefore, the annular sealing structure 9 can stably keep a good sealing effect.

According to an embodiment in another aspect of the present disclosure, a wind turbine gearbox is provided. The gearbox uses the wind turbine gearbox lubricating apparatus in any one of the foregoing embodiments to lubricate the flexible spline in the gearbox, so that the spline teeth can also be kept lubricated sufficiently under the operating condition of the high rotational speed, the spline abrasion can be effectively reduced, the service life of the gearbox can be prolonged, and the maintenance costs of the wind turbine can be reduced.

The above-mentioned embodiments are intended to illustrate the present disclosure in detail such that those skilled in the art may understand the technical concept of the present disclosure, the optimization or equivalent replacement of part structures involved within the scope defined by the claims of the present disclosure and the combinations of implementations in different embodiments without structure and principle conflicts both fall within the scope of protection of the present disclosure.

## Claims

1. A wind turbine gearbox lubricating apparatus having a driving shaft and a driven shaft, the driving shaft and the driven shaft being configured as hollow shafts connected by means of a flexible connector, the wind turbine gearbox lubricating apparatus comprising an inner shaft tube, wherein the inner shaft tube penetrates into the driving shaft and the driven shaft and is fixedly connected to a wind turbine nacelle, an outer wall of the inner shaft tube and an inner wall of the driving shaft define an annular flow channel, and a lubricating oil is provided in the annular flow channel; and a lubricating oil flow channel is provided between the annular flow channel and the flexible connector to allow the lubricating oil to enter between connector teeth of the flexible connector through the annular flow channel.

2. The wind turbine gearbox lubricating apparatus according to claim 1, wherein the annular flow channel is at least partially configured as a tapered cavity, the tapered cavity comprises a first end on a side close to wind turbine blades and a second end in communication with the lubricating oil flow channel, the cross-sectional area of the tapered cavity gradually increases from the first end to the second end, and the tapered cavity is configured to gather the lubricating oil in the annular flow channel to the vicinity of the lubricating oil flow channel.

3. The wind turbine gearbox lubricating apparatus according to claim 1 or 2, wherein the outer wall of the inner shaft tube is provided with a plurality of annular flow limiting grooves for limiting the axial flow of the lubricating oil in the annular flow channel.

4. The wind turbine gearbox lubricating apparatus according to claim 3, wherein the flow limiting grooves are provided on the side close to wind turbine blades relative to the lubricating oil flow channel.

5. The wind turbine gearbox lubricating apparatus according to claim 1 or 2, wherein an accommodating cavity in communication with the gaps of the flexible connector is provided between the driving shaft and the driven shaft, and is configured to accommodate the lubricating oil.

6. The wind turbine gearbox lubricating apparatus according to claim 1 or 2, wherein the inner shaft tube is internally provided with an oil supply pipeline, and the oil supply pipeline is in communication with the annular flow channel through an oil overflow hole formed in a surface of the inner shaft tube to fill the lubricating oil.

7. The wind turbine gearbox lubricating apparatus according to claim 6, wherein the oil overflow hole is provided on the side close to wind turbine blades relative to the flexible connector.

8. The wind turbine gearbox lubricating apparatus according to claim 6, wherein an oil storage tank and an oil pump are provided in the wind turbine nacelle, and the oil pump is configured to pump the lubricating oil in the oil storage tank into the oil supply pipeline.

9. The wind turbine gearbox lubricating apparatus according to claim 1 or 2, wherein a sealing structure is provided between the driven shaft and the inner shaft tube to prevent leakage of the lubricating oil.

10. The wind turbine gearbox lubricating apparatus according to claim 1 or 2, wherein the flexible connector is a flexible spline.

11. A wind turbine gearbox, using the wind turbine gearbox lubricating apparatus as claimed in any one of claims 1 to 10 to lubricate the flexible connector in the gearbox.
